# EUROPEAN PATENT SPECIFICATION

(11) **EP 0 876 765 B1**
(45) Date of publication and mention of the grant of the patent: **16.10.2002**
(21) Application number: 98201228.8
(22) Date of filing: 17.04.1998
(51) Int. Cl.: A23G 9/14, A23G 9/04, A23G 9/28

(54) **Machine for producing cold beverages, in particular crushed ice drinks and sherbets**
Maschine zum Herstellen von gefrorenen Getränken, insbesondere Brucheis oder Sorbets
Appareil pour la production de boissons glacées, en particulier de boissons à base de glace pilée et sorbets

(30) Priority: 18.04.1997 IT MI970915
(43) Date of publication of application: 11.11.1998
(73) Proprietor: ALI S.p.A., 20123 Milano (IT)
(72) Inventor: Bodo, Mauro, 42100 Reggio Emilia (IT)
(74) Representative: Porsia, Dino, Dr.

(56) References cited:
- EP-A- 0 596 722
- FR-A- 2 717 988
- US-A- 4 195 754
- US-A- 5 150 967

## Description

The present invention relates to a machine for preparing cold beverages, of the type comprising a container for liquids or semi-solid mixtures, the container housing refrigeration means and stirring means.

The term cold beverage is used in the present description to cover both drinks flavoured with coffee, tea, milk, mint, orange and other such flavourings, and crushed ice drinks, sherbets and milk shakes.

The term crushed ice drink refers to a semi-solid mixture which is produced by stirring and cooling to freezing point a mixture of sugared water or other water-based compositions, in which the solid phase is finely dispersed so that the crushed ice drink is fluid enough to be pumped and dispensed through an outlet opening. An example of such a crushed ice drink is a drink known as "*granita alia siciliana".*

For the sole purpose of simplifying the description of the present invention, from this point on reference will be made solely to crushed ice drinks.

Machines for producing crushed ice drinks are known which comprise a tank in which the crushed ice is formed and/or stored, this tank being supported by the body of the machine. The tank houses a cylindrical evaporator of a refrigerating unit which is coaxially attached to a screw-type helical scraper directly driven in rotation by a geared motor. During operation of the machine, the evaporator is kept at a temperature a few degrees below the freezing point of the water-based composition contained in the tank, while the scraper continuously scrapes away the solid layer which forms on the surface of the evaporator. After a short period of operation, crushed ice is formed inside the tank. The rotation of the screw-type helical scraper also means that the crushed ice inside the tank is stirred continuously, so that it cannot compact into one or more solid blocks. The evaporator and the helical scraper are supported in projecting fashion at one end and extend into the tank through an opening formed in a side wall of the latter, so that they are positioned close to the bottom of the tank.

The disadvantage of these types of machine is that a seal has to be fitted between the abovementioned opening formed in a side wall of the tank and the evaporator and this seal has to be positioned correctly each time the tank is removed, which requires great skill.

Another disadvantage lies in the fact that the tank cannot be removed while it still contains liquid or crushed ice.

Consequently, given that removal of the tank - for example in order to clean inside it - is complicated as well as tiresome, it will not be done very often and, needless to say, this can only be detrimental to the state of hygiene of the machine.

It should also be pointed out that the fact that the tank is positioned above the body of the machine is not a good thing, both because any splashes or leaks of liquid from the tank would inevitably fall on the underlying electrical parts of the machine and because the flow of warm air carried away from the machine would strike the refrigerated tank.

The object of the present invention is to devise a machine for preparing cold beverages having structural and operational characteristics which overcome the abovementioned drawbacks.

Known machines include those of US 4 195 754 and FR 2 717 988.

This object is achieved by a machine for preparing cold beverages, of the type specified above, which is characterized in that the said container is a tank which is removably fixed to the machine and has an opening at the top, and in that the said refrigeration means and the said stirring means extend into the tank from the said opening at the top, it being possible to pull the tank away from the said refrigeration means and the said stirring means in an essentially vertical direction.

Further characteristics and the advantages of the machine for preparing beverages according to the invention will become apparent from the description set out below of a preferred embodiment thereof, given by way of example with reference to the appended figures, in which:
- Figure 1 shows a perspective view in partial cross-section of a machine for preparing cold beverages according to the invention;
- Figure 2 shows an exploded perspective view of the machine of Figure 1;
- Figure 3 shows a side view in cross-section of the machine of Figure 1; and
- Figure 4 shows a view in cross-section on the plane IV-IV in Figure 3.

With reference to the appended figures, the numeral 1 is the general reference for a machine for preparing and dispensing cold beverages, in this instance, crushed ice drinks.

The machine 1 comprises a body 2 having an upright 3 which extends in a vertical direction Z-Z between a support base 4 and a head 5. The head 5 and the support base 4 project out from the upright 3 in a direction perpendicular to Z-Z so that the body 2 forms an essentially C-shaped casing.

The machine 1 comprises a tank 6 for liquids or semi-solid mixtures which has a bottom 7 and side walls which frame an opening 8 at the top. An outlet opening 9 is formed in the bottom 7 and is associated with a flow shut-off valve 10 which is known per se, for example of manual, lever-operated type. The tank 6 is preferably made of glass or transparent plastic in order to enable the person using the machine 1 to check its contents at a glance.

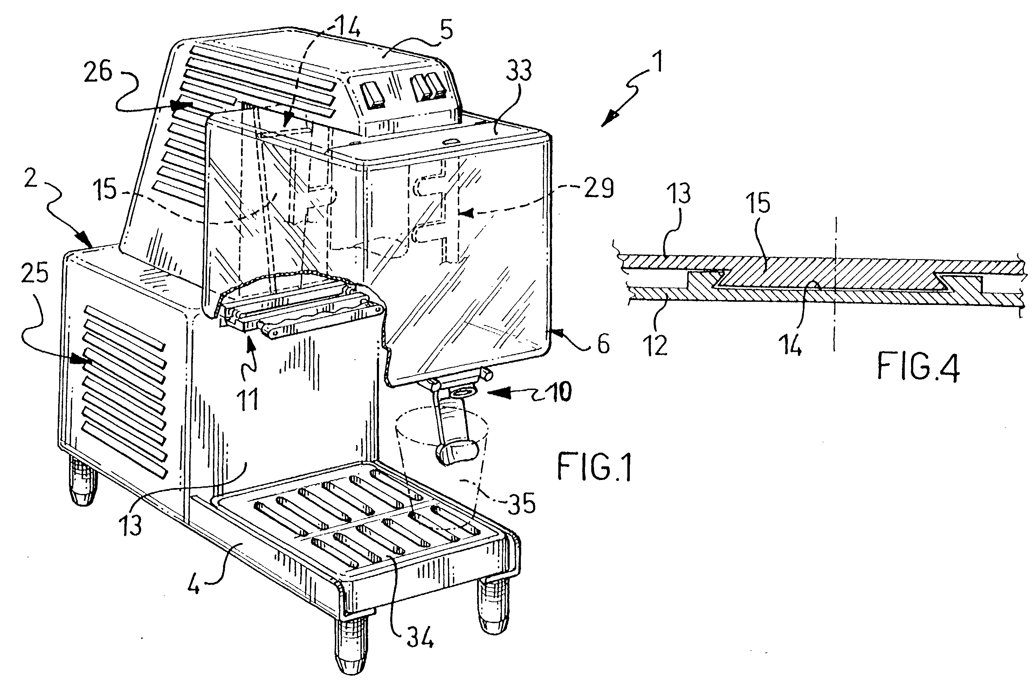

Disengageable attachment means 11 are provided which allow the tank 6 to be removably fixed to the upright 3 of the machine in an operating position (Fig. 1) in which a side wall 12 of the tank 6 is in contact with the front wall 13 of the upright 3, with the opening at the top 8 being positioned close to the head 5, and the bottom 7 being set away from the support base 4 by a distance essentially equal to the height of the tank 6.

The side wall 12 of the tank 6 is shaped such that it forms a groove 14 that extends vertically in the direction Z-Z along the external side of the abovementioned side wall. The groove 14 preferably has a dovetail-shaped cross-section.

The front wall 13 of the upright 3 comprises a projecting part 15 that extends vertically in the vertical direction Z-Z and whose cross-section matches that of the groove 14 so that it can engage with the latter. The projecting part 15 is positioned on the front wall 13 of the upright 3 such that, when the tank 6 is in the abovementioned operating position (Fig. 1), the groove 14 engages with the projecting part 15 (Fig. 4), the projecting part 15 acting like a track and guiding the tank 6 vertically as it is attached to and removed from the upright 3, as will become clearer in the rest of the description, and holding it in place in the abovementioned operating position.

The groove 14 and the projecting part 15 preferably diverge from the base upwards at the same predetermined limited angle. Advantageously, this makes it easier to slide the groove onto the projecting part when the tank 6 is to be mounted.

In the example considered, the disengageable attachment means 11 take the form of a sliding bolt 16 which is supported on the bottom 7 of the tank 6 in a manner known per se and slides between an advanced end-of-travel position and a retracted position. In the advanced end-of-travel position the bolt 16 extends a given distance beyond the side wall 12, while in the abovementioned retracted position the bolt 16 is retracted relative to the side wall 12.

The bolt 16 preferably takes the form of a plate which extends parallel to the bottom 7 across a given width L of the side wall 12, relative to which it is centred. The projecting end of the bolt 16 is cut so as to form an upwardly sloping guide part.

Elastic means 17, consisting for example of helical springs, act on the bolt 16 so as to push it into the abovementioned advanced end-of-travel position with a given elastic load.

A slit 18, extending parallel to the support base 4 across a distance at least equal to the width L of the bolt 16, is formed in the front wall 13 of the upright 3. When the tank 6 is in the abovementioned operating position, the slit 18 constitutes a bolt seat designed to accommodate the bolt 16 in the advanced end-of-travel position and enabling the tank 6 to be securely fixed to the upright 3.

The machine 1 is fitted with a refrigerating unit comprising a refrigerant condenser 19 and a motor-driven compressor 20, housed respectively one above the other in the upright 3, and an evaporator 22. The evaporator 22 takes the form of an annular disc fixed coaxially to the free end of a tubular support element 23. The tubular support element 23 extends downwards from the head 5, over a given distance P, towards the support base 4 below so that the evaporator 22 is positioned close to the bottom 7 of the tank 6 when the latter is in the abovementioned operating position.

The evaporator 22 contains a coil 24 in which expansion of the refrigerant takes place with extraction of heat. The fluid in the coil 24 is in communication with the condenser 19 and with the compressor 20 via respective delivery and return pipes which extend along the upright 3, the head 5 and the tubular support element 23.

Formed in the walls of the upright 3 are lower 25 and upper 26 vents through which the air needed for internal ventilation is respectively sucked in and expelled. A fan 21 is housed in the upright 3 between the compressor 20 and the condenser 19 in order to facilitate the suction of air through the lower vents 25.

A shaft 27 is coaxially supported so that it can rotate inside the tubular support element 23. The top end of the shaft 27 protrudes out of the tubular support element 23 such that it projects inside the head 5 by a certain amount. This end of the shaft 27 is kinematically connected in rotation to a geared motor 28 housed in the top part of the upright 3 and comprising an AC electric motor coupled to speed-reducing gears. The geared motor 28 is preferably connected to the shaft 27 by means of a belt drive comprising a circular-sectioned drive belt which connects a drive pulley attached to the output shaft of the geared motor 28 to a driven pulley attached to the abovementioned end of the shaft 27.

The other end of the shaft 27 protrudes out of the tubular support element 23 and is fixed in rotation to a paddle mixer 29. In the example, the paddle mixer 29 takes the form of a circular plate which is coaxially mounted on the shaft 27, has essentially the same diameter as the evaporator 22, and carries two opposite peripheral fins 30 extending upwards in the direction Z-Z. Paddles 31 extend radially out from the fins 30 towards the shaft 27. The space occupied by the paddle mixer 29 is such that the mixer does not interfere with the walls of the tank 6 during rotation.

The paddle mixer 29 also supports scraper blades 32, of a type known per se, which are positioned so that they scrape over the surface of the evaporator 22.

A lid 33 is supported by the head 5 so that, when the tank 6 is in the operating position, this lid closes off the opening 8 at the top of the tank, thereby stopping any dust getting in. Unlike tanks of the prior art, the tank 6 does not need any seals.

Underneath the head 5, the support base 4 comprises a removable tray 34 in which the condensate that drips from the tank 6 is collected.

The machine 1 comprises additional elements such as valves, fluid conduits, electric circuits, electronic components, switches and other elements that are needed in order to ensure correct functioning of the machine 1; however, since these elements are of a type known per se, they have not been described further in order not to make the present description more complicated than is necessary.

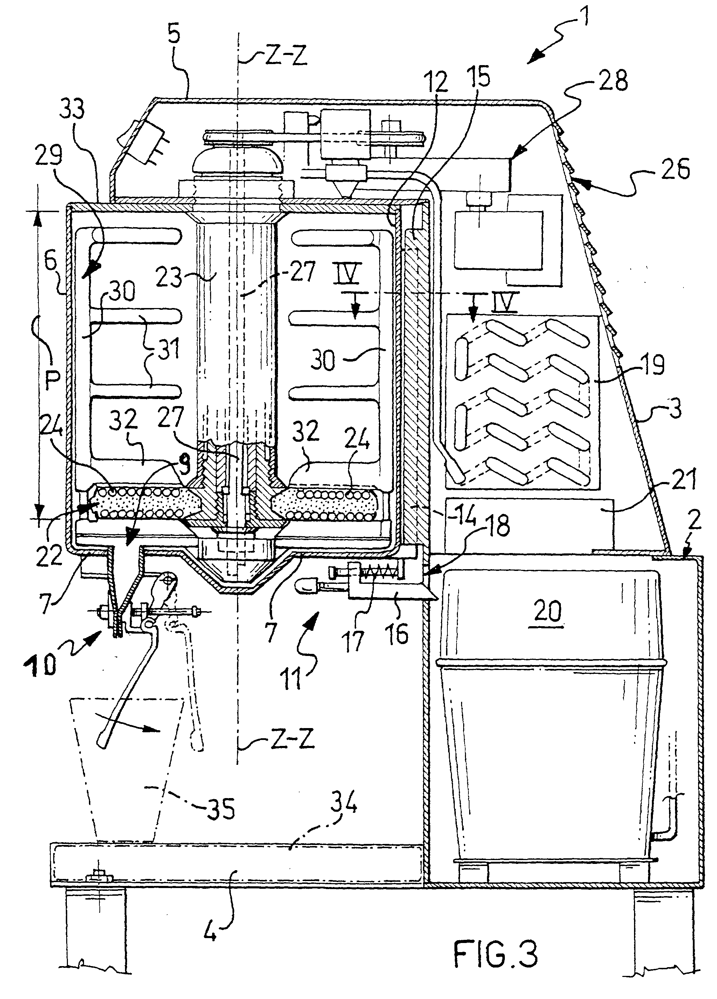

With reference to Figures 1 to 4, the way in which the machine 1 works is described below, starting from an initial state in which the tank 6 is in the operating position and contains a liquid such as sugared water or another water-based liquid composition containing a given amount of syrup.

Operation of the machine 1 comprises an initial stage during which the crushed ice is produced inside the tank 6. During this initial stage, the refrigerant is circulated inside the evaporator 22 so that, as the refrigerant evaporates, the external surface of the evaporator 22 is cooled to a temperature below the freezing point of the liquid contained in the tank 6. As a result, the liquid in contact with the cold surface of the evaporator 22 solidifies. At the same time, the geared motor 28 drives the paddle mixer 29 and the scraper blades 32 in rotation, the latter continuously removing the solid layer that forms on the surface of the evaporator 22, thus forming the crushed ice inside the tank 6.

Both during the abovementioned initial stage of production of the crushed ice, and subsequently during its storage in the tank, the paddle mixer needs to be kept in continuous rotation because if it is not, the crushed ice inside the tank can compact into one or more solid blocks and/or the syrup can separate out of the water.

The crushed ice drink is dispensed by opening the valve 10 so that a glass 35 positioned beneath it on the support base 4 can be filled.

In order to produce a cold drink instead of a crushed ice type drink, all that needs to be done is to regulate the flow of refrigerant in the evaporator so that its temperature does not fall below the freezing point of the liquid.

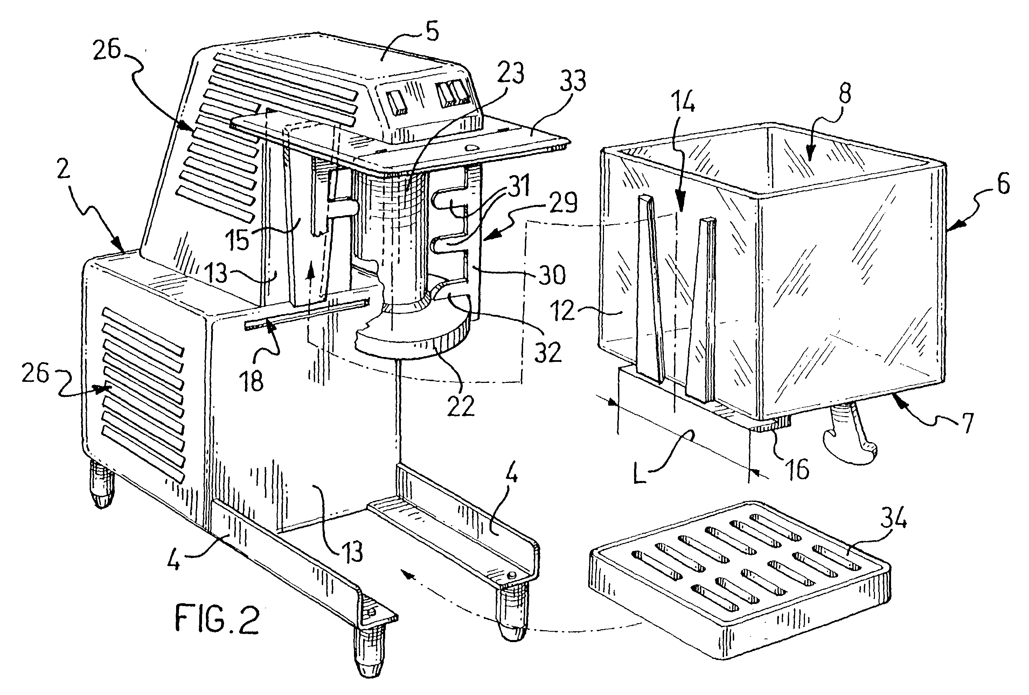

When the tank 6 needs to be removed, for example in order to clean the paddle mixer 29 and the evaporator, the operator simply disconnects the machine from the power supply and, having firmly grasped the tank 6, acts manually on the bolt 16 so as to move it from the advanced end-of-travel position into the retracted position, counter to the force exerted on it by the elastic means 17. In this way, the bolt 16 disengages from the bolt seat formed by the slit 18, and the tank 6 can be pulled down towards the support base 4, sliding it along the track formed by the projecting part 15. The tank 6 is pulled down until it is clear of the paddle mixer 29 and the evaporator 22 and the groove 14 has fully disengaged from the projecting part 15 on the upright 3. At this stage the tank 6 can be pulled away from the machine as shown in Figure 2. Removal of the tank 6 can be facilitated if the removable tray 34 is first removed from the support base 4.

Similarly, in order to attach the tank 6, it has to be positioned over the support base 4 so that the side wall 12 of the tank 6 rests against the front wall 13 of the upright 3 and is approximately central to it. This action causes the front wall 13 of the upright 3 to push the bolt 16 back into the abovementioned retracted position, counter to the force exerted on it by the elastic means 17. All that then needs to be done is to raise the tank 6 towards the head 5 so that the groove 14 slides onto the projecting part 15, the latter acting like a track and ensuring that the tank 6 is properly centred. When the bolt 16 reaches the slit 18, the elastic means 17 pushes it into the advanced position so that it snaps into the slit 18. At this point the person using the machine no longer needs to support the tank 6, and the lid 33 attached to the head 5 ensures that the opening 8 at the top of the tank 6 is closed off.

It is worth emphasizing that the tank 6 can be removed from or attached to the machine 1 irrespective of the amount of liquid or crushed ice it contains. The advantage of this is that the tank 6 can be removed in order to clean the paddle mixer and the evaporator without having to wait until the tank is empty or having to empty out the said tank first. As far as this aspect is concerned, it is worth remembering that in machines of the prior art the tank cannot be removed without first completely emptying it out.

If the user wishes to change the flavour of the beverage being prepared, all he has to do is remove the tank containing the first beverage, clean the mixer and evaporator so as to get rid of any flavouring residues from the drink prepared previously and attach a second tank containing the new flavoured drink. Needless to say, this operation can be carried out in just a few minutes and without difficulty.

It is worth emphasizing that, in contrast to machines of the prior art, the machine according to the invention and described above does not require the use of seals to form a seal between the tank and the body of the machine or between the tank and the evaporator, which means that the tank can easily be attached and removed even by non-technical personnel such as the people using the machine.

The abovementioned vertical layout of the compressor 20, fan 21 and condenser 19, means that an excellent convection current can be set up between the lower vents 25 and the upper vents 26, so that the heat produced inside the body of the machine can be dispersed much more efficiently than is the case with machines of the prior art. Furthermore, unlike machines of the prior art, the flow of hot air carried away from the machine does not strike the refrigerated tank 6.

The positioning of the tank in the abovementioned operating position also prevents the drops of condensate that form on its external surface from reaching the electrical parts of the machine.

As may be appreciated from the above description, the machine for preparing cold beverages according to the invention enables the technical problem on which the present invention is based to be overcome. This is because it allows the tank to be attached and removed irrespective of whether or not it contains any liquid or crushed ice.

Another advantage of the machine for producing beverages according to the invention lies in the fact that no seals are needed between the tank and the mixer or the evaporator.

Another advantage of the machine for producing beverages according to the invention lies in the fact that it enables the parts of the refrigeration unit to be housed inside it in a vertical arrangement, which facilitates the dispersion of heat.

Another advantage of the machine for producing beverages according to the invention lies in the fact that it has proved to be simpler and cheaper to manufacture than the machines of the prior art.

Thus, for example, the tank 6 could be fixed to

the front wall 13 of the upright 3 by means of a plurality of downward-pointing hooks which would project from the side wall 12 of the tank 6 and engage in a corresponding plurality of slots formed in the front wall 13 of the upright 3.

The shape of the tank 6, the type of evaporator and the type of stirring means employed could differ from those described above.

If different flavoured drinks need to be produced simultaneously, it is possible to manufacture a machine comprising a plurality of adjacent tanks, each one of which would have its own refrigeration means and refrigeration means.

## Claims

1. Machine for preparing cold beverages, of the type comprising a container (6) for liquids or semi-solid mixtures, the container housing refrigeration means (22) and stirring means (29), **characterized in that** the said container is a tank (6) which is removably fixed to the machine and has an opening (8) at the top, and **in that** the said refrigeration means (22) and the said stirring means (29) extend into the tank (6) through the said opening (8) at the top, it being possible to pull the tank (6) away from the said refrigeration means (22) and the said stirring means (29, 30, 31, 32) in an essentially vertical direction (Z-Z).

2. Machine according to Claim 1, in which the tank (6) is fixed to the body (2) of the machine by disengageable attachment means (11).

3. Machine according to Claim 2, in which the said disengageable attachment means (11) comprise a bolt (16) which is supported by the tank (6) and can move from and into an advanced end-of-travel position in which the said bolt (16) can engage in a corresponding bolt seat (18) formed in the body (2) of the machine.

4. Machine according to Claim 3, comprising elastic means (17) which elastically push the bolt (16) into the advanced end-of-travel position.

5. Machine according to Claim 2, in which a side wall (12) of the tank (6) is shaped to form a vertically extended grooved profile (14) which is designed to engage with a corresponding matching grooved profile (15) on the body of the machine so that the grooved profiles form a coupling.

6. Machine according to Claim 5, in which the side wall (12) of the tank (6) has a vertically extending groove (14) with a dovetail-shaped cross-section which is designed to engage with a corresponding vertical projecting part (15) on the body (2) of the machine, the cross-section of this projecting part (15) matching that of the said groove (14).

7. Machine according to Claim 2, in which the tank (6) comprises an outlet opening (9) which is associated with valve means (10).

8. Machine according to Claim 2, in which the body (2) of the machine comprises an upright (3) that extends vertically between a projecting head (5) and base (4), the said refrigeration means (22) and the said stirring means (29) extending vertically downwards from the head (5).

9. Machine according to Claim 8, in which the refrigeration means comprise the evaporator (22) of a refrigeration unit, the fluid condenser (19) and compressor (20) of the refrigeration unit being housed respectively one above the other in the vertical upright (3).

10. Machine according to Claim 9, in which lower and upper vents (25, 26) are formed in the vertical upright (3), a fan (21) being housed in the upright (3) in order to facilitate the suction of air through the lower vents (25).

11. Machine according to Claim 8, in which the said stirring means comprise a paddle mixer (29) which is driven in rotation by motor means (28).

## Patentansprüche

1. Maschine zur Zubereitung kalter Getränke von der Art umfassend einen Behälter (6) für Flüssigkeiten oder halbfeste Mischungen, wobei der Behälter Kühlmittel (22) und Rührmittel (29) beherbergt, **dadurch gekennzeichnet, dass** der Behälter ein Tank (6) ist, der abnehmbar an der Maschine befestigt und mit einer Öffnung (8) an der Oberseite versehen ist und dass das Kühlmittel (22) und das Rührmittel (29) sich durch die Öffnung (8) an der Oberseite in den Tank (6) hinein erstrecken, so dass es möglich ist, den Tank (6) vom Kühlmittel (22) und dem Rührmittel (29, 30, 31, 32) in einer im wesentlichen vertikalen Richtung (Z-Z) weg zu ziehen.

2. Maschine nach Anspruch 1, wobei der Tank (6) am Körper (2) der Maschine durch trénnbare Befestigungsmittel befestigt ist.

3. Maschine nach Anspruch 2, wobei die trennbaren Befestigungsmittel (11) einen Bolzen (16) enthalten, der vom Tank (6) gehalten wird und sich von einer fortgeschrittenen Anschlagposition, in der der Bolzen (16) in einen passenden, im Körper (2) der Maschine gebildeten Bolzensitz (18) eingreifen kann, heraus oder in eine solche hinein bewegen kann.

4. Maschine nach Anspruch 3, ein elastisches Mittel (17) umfassend, das den Bolzen (16) auf elastische Weise in die Anschlagposition schiebt.

5. Maschine nach Anspruch 2, wobei eine Seitenwand (12) des Tanks (6) so geformt ist, dass sie ein sich vertikal erstreckendes, gerilltes Profil (14) bildet, das geeignet ist, in ein entsprechendes, dazu passendes, gerilltes Profil (15) auf dem Körper der Maschine einzugreifen, so dass die gerillten Profile eine Kopplung bilden.

6. Maschine nach Anspruch 5, wobei die Seitenwand (12) des Tanks (6) eine vertikal verlaufende Rille (14) mit schwalbenschwanzförmigem Querschnitt aufweist, die so ausgeführt ist, dass sie in ein entsprechendes, vertikal vorspringendes Teil (15) auf dem Körper (2) der Maschine eingreift, wobei der Querschnitt dieses vorspringenden Teils (15) zu jenem der Rille (14) passt.

7. Maschine nach Anspruch 2, in der der Tank (6) eine Auslassöffnung (9) aufweist, die mit einem Ventilmittel (10) verbunden ist.

8. Maschine nach Anspruch 2, wobei der Körper (2) der Maschine einen Ständer (3) aufweist, der sich vertikal zwischen einem vorspringenden Kopf (5) und einer Basis (4) erstreckt, wobei das Kühlmittel (22) und das Rührmittel (29) sich vom Kopf (5) vertikal abwärts erstrecken.

9. Maschine nach Anspruch 8, wobei das Kühlmittel den Verdampfer (22) einer Kühleinheit umfasst, wobei der Fluidkondensator (19) und der Kompressor (20) der Kühleinheit übereinander im vertikalen Ständer (3) angeordnet sind.

10. Maschine nach Anspruch 9, in der im vertikalen Ständer (3) obere und untere Lüftungsöffnungen (25, 26) gebildet sind, wobei im Ständer (3) ein Ventilator (21) untergebracht ist, um das Ansaugen von Luft durch die unteren Lüftungsöffnungen (25) zu ermöglichen.

11. Maschine nach Anspruch 8, wobei das Rührmittel einen Paddelrührer (29) enthält, der von einem Motormittel (28) in Rotation versetzt wird.

## Revendications

1. Appareil de production de boissons glacées du type comprenant un récipient (6) de liquides ou de mélanges semisolides, des moyens (22) de réfrigération et des moyens (29) d'agitation étant logés dans le récipient, **caractérisé en ce que** le récipient est une cuve (6) qui est fixée de manière amovible à l'appareil et qui a une ouverture (8) au sommet et **en ce que** les moyens (22) de réfrigération et les moyens (29) d'agitation s'étendent dans la cuve (6) en passant par l'ouverture (8) au sommet, avec possibilité d'éloigner les moyens (22) de réfrigération et les moyens (29, 30, 31, 32) d'agitation de la cuve (6) en les tirant suivant une direction (Z-Z) essentiellement verticale.

2. Appareil suivant la revendication 1, dans lequel la cuve (6) est fixée au corps (2) de l'appareil, par des moyens (11) de fixation, avec possibilité de l'en détacher.

3. Appareil suivant la revendication 2, dans lequel les moyens (11) de fixation, avec possibilité de détacher la cuve, comprennent un goujon (7) qui est supporté par la cuve (6) et qui peut être mis hors d'une position avancée de fin de course et dans celle-ci, position dans laquelle le goujon (16) peut venir dans un siège (18) correspondant formé dans le corps (2) de la machine.

4. Appareil suivant la revendication 3, comprenant des moyens (17) élastiques qui poussent élastiquement le goujon (16) dans la position avancée de fin de course.

5. Appareil suivant la revendication 2, dans lequel une paroi (12) latérale de la cuve (6) est conformée de manière à former un profilé (14) rainuré s'étendant verticalement, qui est destiné à coopérer avec un profilé (15) rainuré antagoniste correspondant sur le corps de l'appareil, de sorte que les profilés rainurés forment un couplage.

6. Appareil suivant la revendication 5, dans lequel la paroi (12) latérale de la cuve (6) a une gorge (14) s'étendant verticalement et ayant une section transversale en queue d'aronde, qui est destinée à coopérer avec une partie (15) saillante verticale correspondante ménagée sur le corps (2) de l'appareil, la section transversale de cette partie (15) saillante s'adaptant à celle de la gorge (14).

7. Appareil suivant la revendication 2, dans lequel la cuve (6) comprend une ouverture (9) de sortie qui est associée à des moyens (10) de vanne.

8. Appareil suivant la revendication 2, dans lequel le corps (2) de l'appareil comprend un montant (3) qui s'étend verticalement entre une tête (5) de projection et une base (4), les moyens (22) de réfrigération et les moyens (29) d'agitation s'étendant verticalement vers le bas à partir de la tête (5).

9. Appareil suivant la revendication 8, dans lequel les moyens de réfrigération comprennent l'évaporateur (22) d'une unité de réfrigération, le condenseur (19) de fluide et le compresseur (20) de l'unité de réfrigération étant logés respectivement l'un au-dessus de l'autre dans le montant (3) vertical.

10. Appareil suivant la revendication 9, dans lequel des évents (25, 26) inférieurs et supérieurs sont formés dans le montant (3) vertical, un ventilateur (21) étant logé dans le montant (3) afin de faciliter l'aspiration de l'air par les évents (25) inférieurs.

11. Appareil suivant la revendication 8, dans lequel les moyens d'agitation comprennent un mélangeur (29) à palette entraîné en rotation par des moyens (28) à moteur.
